# EUROPEAN PATENT SPECIFICATION

(11) **EP 3 308 857 B1**
(45) Date of publication and mention of the grant of the patent: **08.07.2020**
(21) Application number: 17191529.1
(22) Date of filing: 18.09.2017
(51) Int. Cl.: B01J 41/05, B01J 41/14, B01J 49/57, C02F 1/42, C02F 101/22, C02F 101/10, C02F 101/12, C02F 101/20

(54) **STRONG BASIC POLYACRYLATE ANION EXCHANGERS**
STARK BASISCHE POLYACRYLATANIONENAUSTAUSCHER
ÉCHANGEURS D'ANIONS DE POLYACRYLATE BASIQUES FORTS

(30) Priority: 11.10.2016 US 201615290369
(43) Date of publication of application: 18.04.2018
(73) Proprietor: LANXESS Deutschland GmbH, 50569 Köln (DE); Lanxess Corporation, Pittsburgh, PA 15275-1112 (US)
(72) Inventor: RECKZIEGEL, Aurelia, 41540 Dormagen (DE); REZKALLAH, Areski, 51427 Bergisch Gladbach (DE); MIR, Firuza, Southampton, NJ 08088 (US)
(74) Representative: Herbold, Matthias

(56) References cited:
- EP-A1- 1 568 660
- US-A- 2 675 359
- US-A1- 2003 114 544
- ARUP K. SENGUPTA ET AL: "Important process variables in chromate ion exchange", ENVIRONMENTAL SCIENCE & TECHNOLOGY, vol. 20, no. 2, 1 February 1986 (1986-02-01), pages 149-155, XP055443929, US ISSN: 0013-936X, DOI: 10.1021/es00144a006
- GRZEGORZ WOJCIK ET AL: "Sorption studies of chromium(VI) onto new ion exchanger with tertiary amine, quaternary ammonium and ketone groups", JOURNAL OF HAZARDOUS MATERIALS, vol. 190, no. 1-3, 1 June 2011 (2011-06-01), pages 544-552, XP055443565, AMSTERDAM, NL ISSN: 0304-3894, DOI: 10.1016/j.jhazmat.2011.03.080

## Description

The present invention relates to quaternized diethylenetriamine-functionalized polyacrylate bead polymers, to a process for preparing same and to their use in the removal of oxoanions, particularly chromium (VI) oxoanions from aqueous- and/or organics solutions.

The removal of hexavalent chromium ions from wastewaters or tap waters via strong or weak basic anion exchangers has long been the subject of extensive scientific study. It is thus known from Enviromental Science Technologie, 1988, 20, 149-155, for example, that weak and strong basic ion exchangers based on styrene-DVB, in particular Amberlite® IRA-900 and Amberlite® IRA-94 and strong basic acrylic resins based on quaternized amino groups, in particular IRA-958, are suitable for adsorption of hexavalent chromium ions. Another commercially available strong basic ion exchanger based on styrene-DVB, suitable for adsorption of hexavalent chromium ions, is Purolite A600E/9149.

Strong basic acrylic resins having quaternized amino groups are also known from the Journal of Hazardous Materials, 2011, 190, 544-552, for removal of chromium(VI)oxoanions. These dimethylaminopropylamine-based polymers are insufficiently suitable for adsorption of chromium(VI)oxoanions, since the chromium(VT) capacity of these ion exchangers is too low.

WO 2016/043808 discloses bead-shaped polymers suitable for removal of chromium(VI) oxoanions. These are based on cross-linked polyamines, which may also be coupled to acrylic or styrenedivinylbenzene resins. The process described cannot be implemented on an industrial scale for technical and cost reasons, since toxicologically concerning crosslinkers have to be used, for example.

EP 1568660 describes a method for removing arsenic from water by contacting water with strong basic anionic resins comprising at least one metal ion or metal-containing ion whose arsenate salt has a Kₛₚ no greater than 10⁻⁵. Acrylate-based diethylenetriamine-based ion exchangers are known and readily available commercially, for example under the tradename Lewatit® A 365. Further acrylic amine-functionatized ion exchangers are known, for example under the names Amberlite® FPA 53, Purolite® A 845 and Purolite A 850.

Since prior art ion exchangers do not have adequate chromium(VI) oxoanions capacity, the problem addressed by the present invention was that of providing novel ion exchangers having improved chromium(VI) oxoanions capacity.

The solution to the problem and accordingly the present invention resides in quaternized diethylenetriamine-functionalized polyacrylate bead polymers, wherein the polyacrylate bead polymers which constitute the basis of the quaternized diethylenetriamine-functionalized polyacrylate bead polymers were prepared on the basis of an acrylic monomer fraction greater than 70 wt% relative to the total amount of monomers used and at least one multifunctionally ethylenically unsaturated compound.

The quaternized diethylenetriamine-functionalized polyacrylate bead polymers of the present invention constitute strong basic anion exchangers.

The quaternized diethylenetriamine-functionalized polyacrylate bead polymers of the invention are prepared in a process wherein
a) a monomer mixture formed of at least one acrylic monomer and at least one multifunctionally ethylenically unsaturated compound, and also optionally monovinylaromatic compounds, and also optionally at least one porogen and/or optionally at least one initiator are reacted in an aqueous phase to form a crosslinked bead polymer, wherein the weight quantity of acrylic monomers used is greater than 70 wt% relative to the total amount of monomers used,
   and
b) the bead polymer from step a.) is reacted with diethylenetriamine,
   and
c) the functionalized bead polymer from step b.) is wholly or partly converted with alkyl or aryl halides into quaternized diethylenetriamine-functionalized polyacrylate bead polymers.

According to the invention, the functionalized polyacrylic resins obtainable in step b) comprise mixtures of functional groups of the structures -C(O)NH-CH₂CH₂NH-CH₂CH₂NH₂ and -C(O)N-(CH₂-CH₂-NH₂)₂.

Process step a) utilizes a monomer mixture formed of at least one acrylic monomer and at least one multifunctionally ethylenically unsaturated compound. However, it is also possible to employ as mixtures of two or more acrylic monomers with optionally additional monovinylaromatic compounds and mixtures of two or more multifunctionally ethylenically unsaturated compounds. The acrylic monomers employed for the purposes of the present invention in process step a) are preferably acrylic esters with branched or unbranched C₁-C₆ alkyl moieties and nitriles of acrylic acid. Methyl acrylate, butyl acrylate or acrylonitrile are employed with particular preference. It is very particularly preferable to employ mixtures of acrylic compounds, more preferably mixtures of methyl acrylate and acrlyonitrile or of butyl acrylate and acrlyonitrile.

The monomer mixture to be used in process step a), formed of acrylic monomers and at least one multifunctionally ethylenically unsaturated compound, contains at least 70 wt% of acrylate monomers relative to the total amount of monomers used. Preferably, the monomer mixture to be used in process step a), formed of acrylic monomers and at least one multifunctionally ethylenically unsaturated compound, contains at least 95 wt% of acrylate monomers relative to the total amount of monomers used.

The monovinylaromatic compounds added in a preferred embodiment are preferably styrene, methylstyrene, ethylstyrene, chlorostyrene or vinylpyridine. If used, these monovinylaromatic compounds are preferably added in amounts of 0.1 to 20 wt%, preferably 0.1 to 10 wt%, relative to the sum total of monomers.

Multifunctionally ethylenically unsaturated compounds likewise constitute monomers within the meaning of the invention and are also called crosslinkers and are preferably compounds from the series butadiene, isoprene, divinylbenzene, divinyltoluene, trivinylbenzene, divinylnaphtalene, trivinylnaphtalene, divinylcyclohexane, trivinylcyclohexane, trially cyanurate, triallylamine, 1,7-octadiene, 1,5-hexadiene, cyclopentadiene, norbornadiene, diethylene glycol divinyl ether, triethylene glycol divinyl ether, tetraethylene glycol divinyl ether, butanediol divinyl ether, ethylene glycol divinyl ether, ethylene glycol dimethacrylate, trimethylolpropane trimethacrylate, allyl methacrylate, cyclohexanedimethanol divinyl ether, hexanediol divinyl ether or trimethylolpropane trivinyl ether. Divinylbenzene, 1,7-octadiene or diethylene glycol divinyl ether are used with particular preference. Commercial divinylbenzene grades, which contain ethylvinylbenzene as well as the isomers of divinylbenzene, suffice. Mixtures of different crosslinkers, more preferably mixtures formed of divinylbenzene and divinyl ether are also employable in a preferred embodiment. Very particular preference is given to employing mixtures formed of divinylbenzene, 1,7-octadiene or diethylene glycol divinyl ether. Mixtures formed of divinylbenzene and 1,7-octadiene are particularly preferable in particular.

The amounts in which the multifunctionally ethylenically unsaturated compounds are employed are preferably 1-20 wt%, more preferably 2-12 wt% and yet more preferably 4-10 wt%, relative to the sum total of monomers. The type of multifunctionally ethylenically unsaturated compounds to be employed as crosslinkers is selected with an eye to the later use of the bead polymer.

The monomer mixture forms an organic phase. This phase is mixed with the aqueous phase, typically by stirring, and then forms monomer droplets. However, monomer droplets could also be formed as a result of ultrasonication for example. Dropletization is preferably effected by stirring the monomer mixture.

In a preferred embodiment of the present invention, the monomer mixture contains at least one initiator or mixtures of initiators to initiate the polymerization. Preferred initiators for the process of the invention are peroxy compounds, more preferably peroxy compounds from the series dibenzoyl peroxide, dilauroyl peroxide, bis(p-chlorobenzoyl) peroxide, dicyclohexyl peroxydicarbonate, tert-butyl peroctoate, tert-butyl peroxy-2-ethylhexanoate, 2,5-bis(2-ethyl-hexanoylperoxy)-2,5-dimethylhexane or tert-amylperoxy-2-ethylhexane, and also azo compounds, preferably 2,2'-azobis(isobutyronitrile) or 2,2'-azobis(2-methylisobutyronitrile) or mixtures thereof. Dibenzoyl peroxide is very particularly preferable.

The amounts in which initiators are applied preferably range from 0.05 to 2.5 wt% and more preferably from 0.1 to 1.5 wt% relative to the to the sum total of monomers.

The polyacrylate bead polymers of the invention have a gel-like structure or a macroporous structure, preferably they have a macroporous structure as obtained by using at least one porogen.

Preferred bead polymers for the purposes of the present invention, prepared by process step a), have a macroporous structure. The terms macroporous and gel-like have already been extensively described in the technical literature (See Pure Appl. Chem., Vol. 76, No. 4, pp. 900, 2004).

The macroporous structure is created by using at least one porogen in the monomer droplets. Useful porogens include organic solvents that are poor solvents/swellants for the polymer formed. Porogens to be used with preference are compounds from the series hexane, octane, isooctane, isododecane, methyl ethyl ketone, methyl isobutyl ketone, dichloroethane, dichloropropane, butanol, pentanol, hexanol or octanol and isomers thereof. Mixtures of porogens may also be employed.

To create the macroporous structure, the porogen or porogen mixture is used in amounts of 5 to 70 wt%, preferably 10 to 50 wt%, relative to the sum total of monomers.

The resins obtained without the addition of porogens are gel-like resins, which are likewise a constituent part of the present invention.

In the preparation of the bead polymers according to process step a), the aqueous phase may in a preferred embodiment contain at least one dissolved polymerization inhibitor. Useful polymerization inhibitors for the purposes of the present invention include with preference not only inorganic but also organic compounds. Particularly preferred inorganic polymerization inhibitors are nitrogen compounds from the series hydroxylamine, hydrazine, sodium nitrite or potassium nitrite, salts of phosphorous acid, in particular sodium hydrogenphosphite, and also sulphur-containing compounds, in particular sodium dithionite, sodium thiosulphate, sodium sulphate, sodium bisulphite, sodium thiocyanate or ammonium thiocyanate. Particularly preferred organic polymerization inhibitors are phenolic compounds from the series hydroquinone, hydroquinone monomethyl ether, resorcinol, pyrocatechol, tert-butylpyrocatechol, pyrogallol and condensation products of phenols with aldehydes. Useful organic polymerization inhibitors further include nitrogen-containing compounds. These include hydroxylamine derivatives preferably from the series N,N-diethylhydroxylamine, N-isopropylhydroxylamine and also sulphonated or carboxylated N-alkylhydroxylamine or N,N-dialkylhydroxylamine derivatives, hydrazine derivatives, preferably N,N-hydrazinodiacetic acid, nitroso compounds, preferably N-nitrosophenylhydroxylamine, N-nitrosophenylhydroxylamine ammonium salt or N-nitrosophenylhydroxylamine aluminium salt. The concentration of the polymerization inhibitor to be employed in a preferred embodiment is 5-1000 ppm (relative to the aqueous phase), preferably 10-500 ppm, more preferably 10-250 ppm.

In a preferred embodiment, the polymerization of the monomer droplets to form the spherical bead polymer takes place in the presence of one or more protective colloids in the aqueous phase. Useful protective colloids include natural or synthetic water-soluble polymers, from the series gelatin, starch, polyvinyl alcohol, polyvinylpyrrolidone, polyacrylic acid, polymethacrylic acid or copolymers of acrylic acid or acrylic esters. Gelatin is preferable according to the invention. Cellulose derivatives are also likewise preferable according to the invention, particularly cellulose esters or cellulose ethers, most preferably carboxymethylcellulose, methylhydroxyethylcellulose, methylhydroxypropylcellulose or hydroxyethylcellulose.

Condensation products formed from aromatic sulphonic acids and formaldehyde are also preferable. Naphthalenesulphonic acid/formaldehyde condensates are particularly preferred, especially available from Lanxess Deutschland GmbH under the brand name Baykanol® PQ.

Protective colloids are usable alone or as a mixture of various protective colloids. Very particular preference is given to a mixture of hydroxyethylcellulose and naphthalenesulphonic acid/formaldehyde condensate and/or its sodium salt.

The amount used in respect of total protective colloids is preferably 0.05 to 1 wt% relative to the aqueous phase, more preferably 0.05 to 0.5 wt%.

In a preferred embodiment, the polymerization to form the spherical bead polymer in process step a) may also be carried out in the presence of a buffering system. Preference is given to buffering systems whereby the pH of the aqueous phase is established at a value between 14 and 6, preferably between 12 and 8, at the start of the polymerization. Under these conditions, protective colloids having carboxylic acid groups are wholly or partly in salt form. This has a beneficial effect on the performance of the protective colloids. Particularly suitable buffering systems contain phosphate or borate salts. The terms phosphate and borate within the meaning of the invention also comprehend the condensation products of the ortho forms of corresponding acids and salts. The concentration of the phosphate/borate in the aqueous phase is 0.5-500 mmol/1, preferably 2.5-100 mmol/1.

The average particle size of the optionally encapsulated monomer droplets is 10-1000 µm, preferably 100-1000 µm.

In a further preferred embodiment, the polymerization to form the spherical bead polymer in process step a) may also be carried out in the presence of a salt in the aqueous phase. This reduces the solubility of the organic compounds in water. Preferred salts are halogens, sulphates or phosphates of alkali or alkaline earth metals. They are employable in a concentration range up to saturation of the aqueous phase. The optimum range is therefore different for every salt and has to be tested out.

Sodium chloride is particularly preferable. The preferred concentration range is 15-25% by weight, relative to the aqueous phase.

Stirring speed in the polymerization has particularly at the beginning of the polymerization a significant influence on particle size. In principle, smaller particles are obtained at higher stirring speeds. By adjusting the stirring speed, a person skilled in the art is able to steer the particle size of the bead polymers into the desired range. Various types of stirrer are usable. Grid stirrers having an axial action are particularly suitable. Stirring speeds employed in a 4 litre laboratory glass reactor are typically in the range from 100 to 400 rpm (revolutions per minute).

The polymerization temperature depends on the disintegration temperature of the initiator used. It is preferably between 50 to 180°C, more preferably between 55 and 130°C. The polymerization takes preferably from 0.5 to a number of hours, more preferably from 2 to 20 hours and most preferably from 5 to 15 hours. It will be found advantageous to employ a temperature programme in which the polymerization is started at a low temperature, 60°C for example, and the reaction temperature is raised as the polymerization conversion progresses. This is a very good way to meet, for example, the requirement of a safe and consistent course of reaction and a high conversion for the polymerization. In a preferred embodiment, the bead polymer is isolated by conventional methods, preferably by filtration, decantation or centrifugation, after the polymerization and optionally washed.

The bead polymers obtainable from process step a) preferably have bead diameters in the range from 100 µm to 2000 µm.

The crosslinked bead polymers obtained after process step a) on the basis of acrylic compounds are further processed in process step b) by reaction with diethylenetriamine.

Diethylenetriamine is employed in excess relative to the groups to be aminolysed. The amounts in which diethylenetriamine is employed are preferably from 1.1 to 8 mol, and more preferably in a ratio from 2 to 6 mol per mole of ester/nitrile groups.

In the process of the invention, the temperature of the suspension is heated in process step b), preferably to for 90°C to 150°C, more preferably to from 100°C to 140°C.

The suspension is typically stirred. When the suspension in process step b), stirring is effected for several hours, preferably for 10 to 30 hours, more preferably for 11 to 25 hours.

The diethylenetriamine-functionalized polyacrylate bead polymer produced in step b) of the inventive process may be washed amine-free. The amine content is preferably below 0.01 wt% relative to the total amount of quaternized diethylenetriamine-functionalized polyacrylate bead polymer.

In step c.) of the process according to the invention, the diethylenetriamine-functionalized polyacrylate bead polymers from step b.) are partly or wholly converted into quaternized diethylenetriamine-functionalized polyacrylate bead polymers by conversion using alkyl or aryl halides. The amine groups in the polyacrylate bead polymer undergo alkylation here to form quaternary alkylammonium groups. The quaternary alkylammonium groups preferably constitute quaternary ethylammonium groups or quaternary methylammonium groups, or mixtures thereof. It is particularly preferably for the quaternized diethylenetriamine-functionalized polyacrylate bead polymer to be a quaternary diethylenetriamine-functionalized polyacrylate bead polymer containing methylammonium groups.

The alkylating agents used for the purposes of the present invention in process step c) are preferably chloromethane or benzyl chloride or a mixtures of chloromethane and benzyl chloride. It is particularly preferable to use chloromethane.

The alkylating agents are generally used in amounts of 10 to 200 mol%, relative to the amount of weak basic groups, these preferably being admixed to an aqueous suspension of the diethylenetriamine-functionalized polyacrylate bead polymer from process step b). The amounts in which the alkylating agents are used are preferably from 50 mol% to 150 mol% and more preferably from 110 mol% to 130 mol% relative to the amount of weak basic groups.

Preferably more than 50% of the basic groups, more preferably 60-90% and yet more preferably from 70% to 80% of the basic groups undergo quaternization in the course of the alkylation in step c.) of the process according to the invention.

The quaternized diethylenetriamine-functionalized polyacrylate bead polymers constitute strong basic anion exchangers.

The quaternized diethylenetriamine-functionalized polyacrylate bead polymers preferably have bead diameters in the range from 100 µm to 2000 µm.

The quaternized diethylenetriamine-functionalized polyacrylate bead polymers of the invention are useful in the removal of oxoanions from aqueous- and/or organic solutions.

Oxoanions within the meaning of the present invention are anions of the formula XₙOₘ⁻, XₙOₘ²⁻, XₙOₘ³⁻, HXₙOₘ⁻ or H₂XₙOₘ²⁻, where n represents an integer 1, 2, 3 or 4, m represents an integer 3, 4, 6, 7 or 13 and X represents a metal or transition metal from the series Au, Ag, Cu, Si, P, S, Cr, Ti, Te, Se, V, As, Sb, W, Mo, U, Os, Nb, Bi, Pb, Co, Ni, Fe, Mn, Ru, Re, Tc, Al, B or a non metal from the series Cl, Br, I, CN, C, N.

In a further embodiment of the invention, oxoanions are particularly anions of the formula XOₘ²⁻, XOₘ³⁻, HXOₘ⁻ or H₂XOₘ²⁻, where m represents an integer 3 or 4 and X represents a metal or transition metal from the abovementioned series, preferably P, S, Cr, Te, Se, V, As, Sb, W, Mo, Bi, or a non metal from the series Cl, Br, I, C, N.

It is particularly preferable for oxoanions within the meaning of the invention to be arsenate in the oxidation states (III) and (V), oxoanions of uranium in the oxidation states (III) (IV) and (V), oxoanions of antimony in the oxidation states (III) and (V), of chromium in the oxidation state (VI), of bismuth as bismutate, of molybdenum as molybdate, of vanadium as vanadate, of tungsten as tungstenate, of selenium as selenate, of tellurium as tellurate or of chlorine as chlorate or perchlorate. Very particular preference is given to the oxoanions ClO₃⁻, ClO₄⁻, CrO₄²⁻, Cr₂O₇²⁻ and uranates(VI), in particular UO₄²⁻ and U₂O₇²⁻ and the mono- and polyuranates thereof.

In a further embodiment of the invention oxoanions of uranium (VI) are also sulfates and carbonates as preferably [UO₂(SO₄)₂]²⁻ , [UO₂(SO₄)₃]⁴⁻, [UO₂(CO₃)₂]²⁻ and [UO₂(CO₃)₃]⁴⁻.

The quaternized diethylenetriamine-functionalized polyacrylate resin is very useful in the removal of chromium(VI) oxoanionas chromate (VI) and dichromate (VI), perchlorates, chlorates, arsenates, uranium(VI), uranium(V) and uranium(IV). The quaternized diethylenetriamine-functionalized polyacrylate resin of the invention is even more useful in the removal of chromium(VI) oxoanions from aqueous- and/or organic solutions.

In a further embodiment the present invention relates to a process for the removal of oxoanions from aqueous- and/or organic solutions wherein in a step a.) an oxoanion containing aqueous- and/or organic solutions will be brought into contact with at least one quaternized diethylenetriamine-functionalized polyacrylate resin and in a step b.) the quaternized diethylenetriamine-functionalized polyacrylate resin will be regenerated by using an aqueous anion solution.

As aqueous anion solution for the regeneration process preferably an aqueous alkali metal- or alkaline earth metal halogen solutions will be used. As alkali metal- or alkaline earth metal halogens preferably sodium chloride, potassium chloride or lithium chloride will be used.

The resin of the invention has a particularly high capacity for chromium(VI) oxoanions.

The quaternized diethylenetriamine-functionalized polyacrylate bead polymers further have a high level of mechanical stability.

### Determination of the amount of weak and strong basic groups

50 ml of anion exchanger have 500 ml of 2 wt% aqueous sodium hydroxide solution applied thereto in a glass column. The resin is subsequently washed with completely ion-free water to remove the excess of aqueous sodium hydroxide solution.

### Pretreatment with NaCl

50 ml of the exchanger which is in free base form and has been washed neutral have 800 ml of 2.5 wt% aqueous sodium chloride solution applied thereto. The run-off is discarded. The resin is washed with completely ion-free water.

### Determination of NaNO₃ number

Then, 800 ml of 2.5 wt% sodium nitrate solution are passed through the column. The run-off is made up to 1000 ml with completely ion-free water. An aliquot thereof - 5 ml - is taken and analysed for its chloride content by titration with silver nitrate solution.

The resin is washed with completely ion-free water.

Consumed ml of Ag(NO₃) solution × 0.4 = NaNO₃ number in mol/litre of resin.

### Determination of HCl number

50 mL of hydrochloric acid c(HCl) = 1.0 mol/L are introduced into the dropping funnel and made up with 450 mL of completely ion-free water. The solution is subsequently dripped through the resin and the run-off is collected in the 1 L graduated flask. Then, 200 mL of methanol are dripped through the resin and the run-off is collected in the same 1 L graduated flask, made up to the mark with completely ion-free water and thoroughly commixed.

5 mL thereof is pipetted into a sample beaker and made up to about 100 mL volume with completely ion-free water. The sample is titrated with aqueous sodium hydroxide solution c(NaOH) = 0.1 mol/L.
(2.5 - consumed (NaOH) = 0.1 mol/L) ^{∗} 0.4 = HCl number in mol/litre of resin.

The total amount of basic groups is equal to the sum total formed from the NaNO₃ number and the HCl number.

The number of weak basic groups is equal to the HCl number.

### Examples

### Example 1

### 1.1 Preparation of crosslinked bead polymer

A mixture formed of 147 g of methyl acrylate, 657 g of acrylonitrile, 42.4 g of divinylbenzene (level of pure divinylbenzene: 81.6%, balance ethylstyrene) and 17 g of octadiene is provided and 191 g of dichloroethane and 3.5 g of dibenzoyl peroxide (75% strength) are dissolved therein. The solution is subsequently stirred together with an aqueous solution of 439 g of sodium chloride, 5.2 g of Baykanol® PQ solution (30% strength, product of Lanxess Deutschland GmbH), 21.1 g of disodium hydrogenphosphate, 1.2 g of sodium hydroxide solution (50% strength), 224 g of hydroxyl ethyl cellulose solution containing 2.47 g of hydroxyl ethyl cellulose into 1490 g of deionized water and then polymerized initially for 7 h at 64°C. This is followed by heating to 100°C over 30 min. This is followed by cooling to 60°C and the admixture of 388 g of sodium disulphite solution (20% strength). The batch is then heated to 80°C, maintained at 80°C for 1 h and then cooled down to room temperature. At 100°C, the dichloroethane is distilled off from the bead polymer over 3 h. The batch is washed with deionized water.
Yield: 924 g of moist bead polymer
Particle size: 0.125-1.6 mm
The dry weight was 0.72 g/ml.

### 1.2 Preparation of diethylenetriamine-functionalized polyacrylate bead polymer

250 g of the macroporous methyl acrylate bead polymer whose preparation is described in Example 1.1 is suspended in a mixture formed of 957 g of diethylenetriamine (DETA) and 108 g of deionized water. This is followed by heating stepwise to 90°C and 100°C during a time of 5 hours and then to 128 °C and keeping the reaction mixture at that temperature for 420 min. This is followed by cooling down to 60°C, and the mother liquor is drawn off using a sieve tube. The resin is washed with deionized water.
Yield: 1170 mL
Original stability: 99% perfect beads
Total capacity: 3.83 eq/L
Water content: 48.8 %
Osmotic Stability: 98% perfect beads

### 1.3 Reaction of diethylenetriamine-functionalized polyacrylate bead polymer from Example 1.2 with chloromethane

800 mL of weak basic resin washed amine-free are initially charged to the reactor in 1600 mL of deionized water and 606 g of aqueous sodium hydroxide solution (50% strength). The suspension is heated to 40°C. 512 g of chloromethane are metered in over 48 h. After cooling, the resin is filtered off, washed with deionized water and subjected to volume determination.
Yield: 1035 mL
Original stability: 99% perfect beads
Total capacity: 2.76 eq/L
NaNO₃ number: 2.09 eq/L
HCL number: 0.67 eq/L
Degree of quaternization: 75.7%
Water content: 38.7%
Osmotic Stability: 98% perfect beads
Roll test: 98% perfect beads
Piston test: 98% perfect beads
Ball milling test: 98% perfect beads

### 1.4 Chromium capacity

The chromium operating capacity of beads of the present disclosure was evaluated in a raw water from Willows Station 9, California.

The inventive polymeric beads were prepared according to example 1.3 (total capacity of basic groups = 2,76 eq/L). The resin of example 1.3 and a commercially available gel-like strong base styrene / divinylbenzene anion resin with trimethylammonium groups (Purolite A 600 E/9149, total capacity of basic groups = 1,6 eq/L - the comparison resin -) were loaded into two separate columns with deionized water. A centrifugal pump was used to feed raw water via piping into each column while a totalizer was used to determine the cumulative flow through each column. Samples were taken at two points in the column, equating to Empty Bed Contact Time (EBCT) of 49 seconds and 2,37 min.

The operational conditions are show below in Table 1.

| **Parameters** | **Unit** | **Value** |
|---|---|---|
| Column Diameter | in. | 2 |
| Resin volume | gal | 0,25-0,75 |
| Hydraulic loading rate (HLR) | gpm/ft² | 15 |
| EBCT | sec. | 45-135 |

The groundwater chemistry for Willows Station 9 is show below in Table 2:

**Table 2 : Average raw quality summary (2000-2016) for Willows Station 9**

| Parameter (unit) | |
|---|---|
| Pilot Testing Period | 2016 |
| Cr (VI) (mg/L) | 16 |
| Alkalinity (mg/L as CaCO₃) | 225 |
| Nitrate (mg/L as NO₃-N) (mg/L) | 4,2¹ |
| Sulfate (mg/L) | 49 |

| | |
|---|---|
| *¹Average raw quality during pilot testing* | |

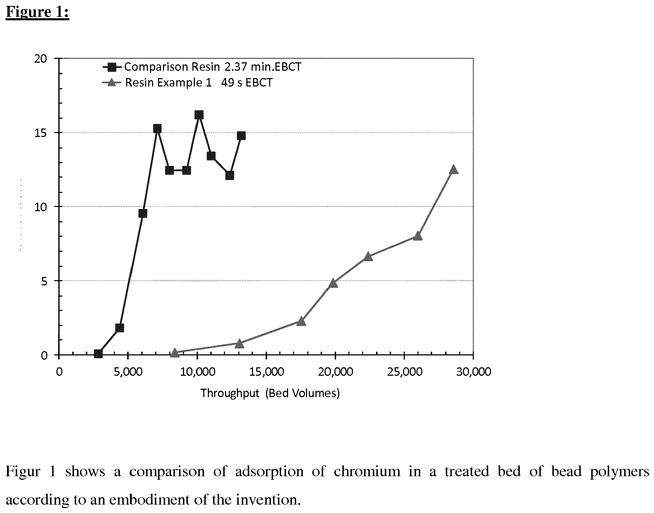

The feeds and effluents were collected periodically and analyzed. The effluent chromium concentrations were plotted against the treated bed volume (BV) as shown in Figure 1. The resin from example 1.3 has a breakthrough of 10µg/L at approximately 27.000 bed volumes. The comparison resin has a breakthrough of 10µg/L at approximately 5000 bed volumes. This means that the resin of example 1.3 adsorbs nearly 5 to 6 times more Cr(VI) than the comparison resin.

The resins will be regenerated using 2N NaCl solution followed by a soft water rinse after its breakthrough by 10µg/L Cr(VI).

## Claims

1. Quaternized diethylenetriamine-functionalized polyacrylate bead polymers, **characterized in that** the polyacrylate bead polymers which constitute the basis of the quaternized diethylenetriamine-functionalized polyacrylate bead polymers were prepared on the basis of an acrylic monomer fraction greater than 70 wt% acrylic monomers relative to the total amount of monomers used and at least one multifunctionally ethylenically unsaturated compound.

2. Quaternized diethylenetriamine-functionalized polyacrylate bead polymers according to Claim 1, **characterized in that** the polyacrylate bead polymer was prepared on the basis of an acrylic monomer fraction greater than 95 wt% relative to the total amount of monomers used.

3. Process for preparing the quaternized diethylenetriamine-functionalized polyacrylate bead polymers according to Claim 1, **characterized in that**
a) a monomer mixture formed of at least one acrylic monomer and at least one multifunctionally ethylenically unsaturated compound, and also optionally monovinylaromatic compounds, and also optionally at least one porogen and at least one initiator are reacted in an aqueous phase to form a crosslinked bead polymer, wherein the weight quantity of acrylic monomers used is greater than 70 wt% relative to the total amount of monomers used,
and
b) the bead polymer from step a.) is reacted with diethylenetriamine,
and
c) the functionalized bead polymer from step b.) is wholly or partly converted with alkyl or aryl halides into quaternized diethylenetriamine-functionalized polyacrylate bead polymers.

4. Process for preparing the quaternized diethylenetriamine-functionalized polyacrylate bead polymers according to Claim 3, **characterized in that** the weight quantity of acrylic monomers used is greater than 95 wt% relative to the total amount of monomers used in step a.).

5. Process for preparing the quaternized diethylenetriamine-functionalized polyacrylate bead polymers according to Claim 3 or 4, **characterized in that** the temperature in process step b.) is between 90°C and 150°C.

6. Process for preparing the quaternized diethylenetriamine-functionalized polyacrylate bead polymers according to at least one of Claims 3 to 5, **characterized in that** the amount of alkyl or aryl halides which are used in step c.) is between 50 mol% and 150 mol% relative to the amount of basic groups.

7. Process for the removal of oxoanions from aqueous- and/or organic solutions, **characterized in that**, in a step a.) an oxoanion containing aqueous- and/or organic solutions will be brought into contact with a at least one quaternized diethylenetriamine-functionalized polyacrylate resin as claimed by claim 1 and in a step b.) the quaternized diethylenetriamine-functionalized polyacrylate resin will be regenerated by using an aqueous anion solution.

8. Use of the quaternized diethylenetriamine-functionalized polyacrylate bead polymers from Claim 1 in the removal of oxoanions from aqueous and organic solutions.

9. Use of the quaternized diethylenetriamine-functionalized polyacrylate bead polymers according to Claim 8 in the removal of oxoanions selected from the group XₙOₘ⁻, XₙOₘ²⁻, XₙOₘ³⁻, HXₙOₘ⁻ or H₂XₙOₘ²⁻, where n represents an integer 1, 2, 3 or 4, m represents an integer 3, 4, 6, 7 or 13 and X represents a metal or transition metal from the series Au, Ag, Cu, Si, P, S, Cr, Ti, Te, Se, V, As, Sb, W, Mo, U, Os, Nb, Bi, Pb, Co, Ni, Fe, Mn, Ru, Re, Tc, Al, B or a non-metal from the series F, Cl, Br, I, CN, C, N.

10. Use of the quaternized diethylenetriamine-functionalized polyacrylate bead polymers according to Claim 9 in the removal of chromium(VI) oxoanions,as chromate (VI) and dichromate (VI), perchlorates, chlorates, arsenates, uranium(VI), uranium(V) and uranium(IV) oxoanionsfrom aqueous- and/or organic solutions.

## Patentansprüche

1. Quaternierte Diethylentriamin-funktionalisierte Polyacrylatperlpolymerisate, **dadurch gekennzeichnet, dass** die Polyacrylatperlpolymerisate, die die Basis der quaternierten Diethylentriamin-funktionalisierten Polyacrylatperlpolymerisate darstellen, auf Basis eines Acrylmonomerenanteils größer als 70 Gew.-% Acrylmonomere, bezogen auf die Gesamtmenge an eingesetzten Monomeren, und mindestens einer multifunktionell ethylenisch ungesättigten Verbindung hergestellt wurden.

2. Quaternierte Diethylentriamin-funktionalisierte Polyacrylatperlpolymerisate gemäß Anspruch 1, **dadurch gekennzeichnet, dass** das Polyacrylatperlpolymerisat auf Basis eines Acrylmonomerenanteils größer als 95 Gew.-%, bezogen auf die Gesamtmenge an eingesetzten Monomeren, hergestellt wurde.

3. Verfahren zur Herstellung der quaternierten Diethylentriamin-funktionalisierten Polyacrylatperlpolymerisate gemäß Anspruch 1, **dadurch gekennzeichnet, dass** man
a) eine Monomerenmischung aus mindestens einem Acrylmonomer und mindestens einer multifunktionell ethylenisch ungesättigten Verbindung sowie gegebenenfalls monovinylaromatische Verbindungen sowie gegebenenfalls mindestens ein Porogen und mindestens einen Initiator in einer wässrigen Phase zu einem vernetzten Perlpolymerisat umsetzt, wobei die Gewichtsmenge an eingesetzten Acrylmonomeren größer als 70 Gew.-%, bezogen auf die Gesamtmenge an eingesetzten Monomeren, ist,
und
b) das Perlpolymerisat aus Schritt a.) mit Diethylentriamin umsetzt
und
c) das funktionalisierte Perlpolymerisat aus Schritt b.) mit Alkyl- oder Arylhalogeniden teilweise oder vollständig zu quaternierten Diethylentriamin-funktionalisierten Polyacrylatperlpolymerisaten umsetzt.

4. Verfahren zur Herstellung der quaternierten Diethylentriamin-funktionalisierten Polyacrylatperlpolymerisate gemäß Anspruch 3, **dadurch gekennzeichnet, dass** die Gewichtsmenge an eingesetzten Acrylmonomeren größer als 95 Gew.-%, bezogen auf die Gesamtmenge an eingesetzten Monomeren in Schritt a.), ist.

5. Verfahren zur Herstellung der quaternierten Diethylentriamin-funktionalisierten Polyacrylatperlpolymerisate gemäß Anspruch 3 oder 4, **dadurch gekennzeichnet, dass** die Temperatur in Verfahrensschritt b.) zwischen 90 °C und 150 °C liegt.

6. Verfahren zur Herstellung der quaternierten Diethylentriamin-funktionalisierten Polyacrylatperlpolymerisate gemäß mindestens einem der Ansprüche 3 bis 5, **dadurch gekennzeichnet, dass** die Menge an Alkyl- oder Arylhalogeniden, die in Schritt c.) eingesetzt werden, zwischen 50 Mol-% und 150 Mol-%, bezogen auf die Menge basischer Gruppen, liegt.

7. Verfahren zur Entfernung von Oxoanionen aus wässrigen und/oder organischen Lösungen, **dadurch gekennzeichnet, dass** in Schritt a.) ein Oxoanion enthaltende wässrige und/oder organische Lösungen mit mindestens einem quaternisierten Diethylentriamin-funktionalisierten Polyacrylatharz gemäß Anspruch 1 in Kontakt gebracht werden und in Schritt b.) das quaternisierte Diethylentriamin-funktionalisierte Polyacrylatharz durch Verwendung einer wässrigen Anionenlösung regeneriert wird.

8. Verwendung der quaternierten Diethylentriamin-funktionalisierten Polyacrylatperlpolymerisate aus Anspruch 1 zur Entfernung von Oxoanionen aus wässrigen und organischen Lösungen.

9. Verwendung der quaternierten Diethylentriamin-funktionalisierten Polyacrylatperlpolymerisate gemäß Anspruch 8 zur Entfernung von Anionen ausgewählt aus der Gruppe XₙOₘ⁻, XₙOₘ²⁻, XₙOₘ³⁻, HXₙOₘ⁻ oder H₂XₙOₘ²⁻, worin n für eine ganze Zahl 1, 2, 3 oder 4 steht, m für eine ganze Zahl 3, 4, 6, 7, oder 13 steht und X für ein Metall oder Übergangsmetall der Reihe Au, Ag, Cu, Si, P, S, Cr, Ti, Te, Se, V, As, Sb, W, Mo, U, Os, Nb, Bi, Pb, Co, Ni, Fe, Mn, Ru, Re, Tc, Al, B oder ein Nichtmetall der Reihe F, Cl, Br, I, CN, C, N steht.

10. Verwendung der quaternierten Diethylentriamin-funktionalisierten Polyacrylatperlpolymerisate gemäß Anspruch 9 zur Entfernung von Chrom(VI)-Oxoanionen, wie Chromat(VI) und Dichromat(VI), Perchloraten, Chloraten, Arsenaten, Uran(VI)-, Uran(V)- und Uran(IV)-Oxoanionen aus wässrigen und/oder organischen Lösungen.

## Revendications

1. Polymères en perles de polyacrylate fonctionnalisé par diéthylènetriamine quaternisé, **caractérisés en ce que** les polymères en perles de polyacrylate qui constituent la base des polymères en perles de polyacrylate fonctionnalisé par diéthylènetriamine quaternisé ont été préparés à base d'une fraction de monomères acryliques supérieure à 70 % en poids de monomères acryliques par rapport à la quantité totale de monomères utilisés et d'au moins un composé multifonctionnel éthyléniquement insaturé.

2. Polymères en perles de polyacrylate fonctionnalisé par diéthylènetriamine quaternisé selon la revendication 1, **caractérisés en ce que** le polymère en perles de polyacrylate a été préparé à base d'une fraction de monomère acrylique supérieure à 95 % en poids par rapport à la quantité totale de monomères utilisés.

3. Procédé pour la préparation des polymères en perles de polyacrylate fonctionnalisé par diéthylènetriamine quaternisé selon la revendication 1, **caractérisé en ce que**
a) un mélange de monomères formé d'au moins un monomère acrylique et d'au moins un composé multifonctionnel éthyléniquement insaturé, et également éventuellement de composés monovinylaromatiques, et également éventuellement d'au moins un porogène et d'au moins un initiateur sont mis à réagir dans une phase aqueuse pour former un polymère en perles réticulé, la quantité en poids de monomères acryliques utilisés étant supérieure à 70 % en poids par rapport à la quantité totale de monomères utilisés,
et
b) le polymère en perles de l'étape a) est mis à réagir avec de la diéthylènetriamine,
et
c) le polymère en perles fonctionnalisé de l'étape b) est entièrement ou partiellement converti avec des halogénures d'alkyle ou d'aryle en des polymères en perles de polyacrylate fonctionnalisé par diéthylènetriamine quaternisé.

4. Procédé pour la préparation des polymères en perles de polyacrylate fonctionnalisé par diéthylènetriamine quaternisé selon la revendication 3, **caractérisé en ce que** la quantité en poids de monomères acryliques utilisés est supérieure à 95 % en poids par rapport à la quantité totale de monomères utilisés dans l'étape a).

5. Procédé pour la préparation des polymères en perles de polyacrylate fonctionnalisé par diéthylènetriamine quaternisé selon la revendication 3 ou 4, **caractérisé en ce que** la température dans l'étape de procédé b) est comprise entre 90 °C et 150 °C.

6. Procédé pour la préparation de polymères en perles de polyacrylate fonctionnalisé par diéthylènetriamine quaternisé selon au moins l'une des revendications 3 à 5, **caractérisé en ce que** la quantité d'halogénures d'alkyle ou d'aryles qui sont utilisés dans l'étape c) est comprise entre 50 % en moles et 150 % en moles par rapport à la quantité de groupes basiques.

7. Procédé pour l'élimination d'oxoanions de solutions aqueuses et/ou organiques, **caractérisé en ce que**, dans une étape a.) des solutions aqueuses et/ou organiques contenant un oxoanion seront mises en contact avec au moins une résine de polyacrylate fonctionnalisé par diéthylènetriamine quaternisé selon la revendication 1 et dans une étape b.) la résine de polyacrylate fonctionnalisé par diéthylènetriamine quaternisé sera régénérée en utilisant une solution aqueuse d'anions.

8. Utilisation des polymères en perles de polyacrylate fonctionnalisé par diéthylènetriamine quaternisé selon la revendication 1 dans l'élimination d'oxoanions de solutions aqueuses et organiques.

9. Utilisation des polymères en perles de polyacrylate fonctionnalisé par diéthylènetriamine quaternisé selon la revendication 8 dans l'élimination d'oxoanions choisis dans le groupe XₙOₘ⁻, XₙOₘ²⁻, XₙOₘ³⁻, HXₙOₘ⁻, ou H₂XₙOₘ²⁻, où n représente un entier 1, 2, 3 ou 4, m représente un entier 3, 4, 6, 7 ou 13 et X représente un métal ou un métal de transition de la série Au, Ag, Cu, Si, P, S, Cr, Ti, Te, Se, V, As, Sb, W, Mo, U, Os, Nb, Bi, Pb, Co, Ni, Fe, Mn, Ru, Re, Tc, Al, B ou un non-métal de la série F, Cl, Br, I, CN, C, N.

10. Utilisation des polymères en perles de polyacrylate fonctionnalisé par diéthylènetriamine quaternisé selon la revendication 9 dans l'élimination d'oxoanions de chrome(VI), comme le chromate (VI) et le dichromate (VI), de perchlorates, de chlorates, d'arséniates, d'oxoanions d'uranium(VI), d'uranium(V) et d'uranium(IV) de solutions aqueuses et/ou organiques.
